# EUROPÄISCHE PATENTSCHRIFT

(11) **EP 0 408 497 B1**
(45) Veröffentlichungstag und Bekanntmachung des Hinweises auf die Patenterteilung: **04.05.1994**
(21) Anmeldenummer: 90810500.0
(22) Anmeldetag: 04.07.1990
(51) Int. Cl.: B60J 3/02

(54) **Blendschutzeinrichtung für Autoinsassen**
Glare-protection device for passengers of motor vehicles
Dispositif de protection contre l'éblouissement pour passagers de véhicules automobiles

(30) Priorität: 10.07.1989 CH 2570/89
(43) Veröffentlichungstag der Anmeldung: 16.01.1991
(73) Patentinhaber: Kokeisl, Theodor, CH-5036 Oberentfelden (CH)
(72) Erfinder: Kokeisl, Theodor, CH-5036 Oberentfelden (CH)
(74) Vertreter: Bosshard, Ernst

(56) Entgegenhaltungen:
- CH-A- 502 907
- DE-A- 2 332 613
- US-A- 4 090 732

## Beschreibung

Die Erfindung bezieht sich auf eine Blendschutzeinrichtung für Autoinsassen, gegen Blendgefahr entgegenkommender Fahrzeuge, mit einer plattenförmigen, getönten Blendschutzscheibe und mit Befestigungsmitteln zur Befestigung an der fahrzeugeigenen Sonnenschutzklappe oder an einem Fahrzeugteil, wobei die Blendschutzscheibe in einer länglichen Schiene linear verschiebbar gehalten und um eine quer zur Verschieberichtung angeordnete Achse schwenkbar ist, mit der Schiene ein in deren Längsrichtung verstellbarer Schieber zusammenwirkt, der eine Schwenkachse trägt, die ihrerseits mit der Blendschutzscheibe verbunden ist.

Bei nächtlichen Autofahrten ist die Blendung entgegenkommender Fahrzeuge unangenehm. Diese Blendung wird besonders lästig, wenn die Abblendlichter zu hoch eingestellt sind und die Fahrzeuge zudem mit lichtstarken Halogenlampen ausgerüstet sind.

Die Augen der Autofahrer werden durch diese Blendwirkung empfindlich getroffen, was die klare Sicht auf die eigene Fahrbahn und die Gegenfahrbahn vermindert. Nach einer Blendung benötigt das menschliche Auge wieder einige Sekunden, bis sich das Auge wieder an die Dunkelheit oder die vorher herrschenden Lichtverhältnisse angepasst hat. Während dieser Uebergangs- und Anpassungszeit des Auges besteht eine erhöhte Unfallgefahr.

Aus der US-A-4090732 ist eine Blendschutz-Einrichtung bekannt, die mittels Bügeln an einer Sonnenschutzklappe befestigt werden kann. Es sind zwei hintereinander angeordnete Blendschutzscheiben vorhanden, die sich entlang einer Schiene verstellen und einzeln zwischen einer Gebrauchs- und Nichtgebrauchslage verschwenken lassen. Die Schwenkachse befindet sich in der untersten Schiebelage oberhalb des unteren Schienenendes, was den Schwenkbereich der Blendschutzscheiben beschränkt.

Die DE-A1-2332613 zeigt eine Vorrichtung zur Erweiterung des Blendschutzbereiches einer Sonnenblende von Kraftfahrzeugen. Innerhalb eines Schutzgehäuses sind Blendschutzscheiben vorgesehen, die nach unten oder seitlich herausziehbar angeordnet sind. Dies setzt eine Spezialkonstruktion der Sonnenschutzklappe voraus.

Aus der CH-PS 502 907 ist ferner eine Zusatzblende für Motorfahrzeuge bekannt, die durch zwei Klammern auf die fahrzeugeigene Sonnenschutzklappe aufsetzbar ist. Unbefriedigend ist, dass diese Zusatzblende sich nur parallel zur Fläche der Sonnenschutzblende verschieben lässt und im Nichtgebrauchszustand von der Sonnenblende entfernt werden muss.

Mit der Erfindung soll die Aufgabe gelöst werden, eine Blendschutzeinrichtung zu schaffen, welche unter Beibehaltung der Verstellbarkeit in der Höhe - also quer zur Längsausdehnung der Sonnenschutzklappe - und der Möglichkeit zum Hochklappen in eine Nichtgebrauchslage eine einfache und individuelle Anpassung an die Sitzposition und Augenhöhe jeweiliger Autoinsassen erlaubt, derart, dass sowohl ein Blick durch die Blendschutzscheibe als auch knapp unter dieser hindurch auf den unmittelbar benachbarten Bereich der Fahrbahn möglich ist.

Diese Aufgabe wird dadurch gelöst, dass sich die Schwenkachse in der untersten Schieberstellung unterhalb der Schieberunterkante befindet.

Dadurch ist es möglich die Lage der Blendschutzscheibe individuell an Körpergrösse und Abstand der Augen zur Blendschutzscheibe anzupassen, unabhängig von der Neigung, welche beispielsweise die im Fahrzeug vorhandene Sonnenschutzklappe einnimmt, an welcher die Blendschutzeinrichtung befestigbar ist.

Da die Schwenkachse in der untersten Schieberstellung von der Schienenunterkante distanziert ist, kann die Blendschutzscheibe weit nach rückwärts verschwenkt werden. Dies erlaubt eine exakte Positionierung der Blendschutzeinrichtung auch für grosse Personen, sodass freie Sicht unter der Blendschutzscheibe auf die Fahrbahn besteht und bei Blendgefahr durch Gegenlichter eine leichte Bewegung des Kopfes oder der Augen genügt, um durch die getönte Blendschutzscheibe hindurch blicken zu können, um die Blendwirkung zu verhindern.

In der Zeichnung ist ein Ausführungsbeispiel des Erfindungsgegenstandes dargestellt. Es zeigen:
- Fig.1: eine Ansicht der Blendschutzeinrichtung
- Fig.2: eine Seitenansicht der Blendschutzeinrichtung teilweise im Schnitt, zusammen mit einer fahrzeugeigenen Sonnenschutzklappe
- Fig.3: einen Querschnitt durch den Schieber
- Fig.4: einen Teil-Längsschnitt durch die Schiene.

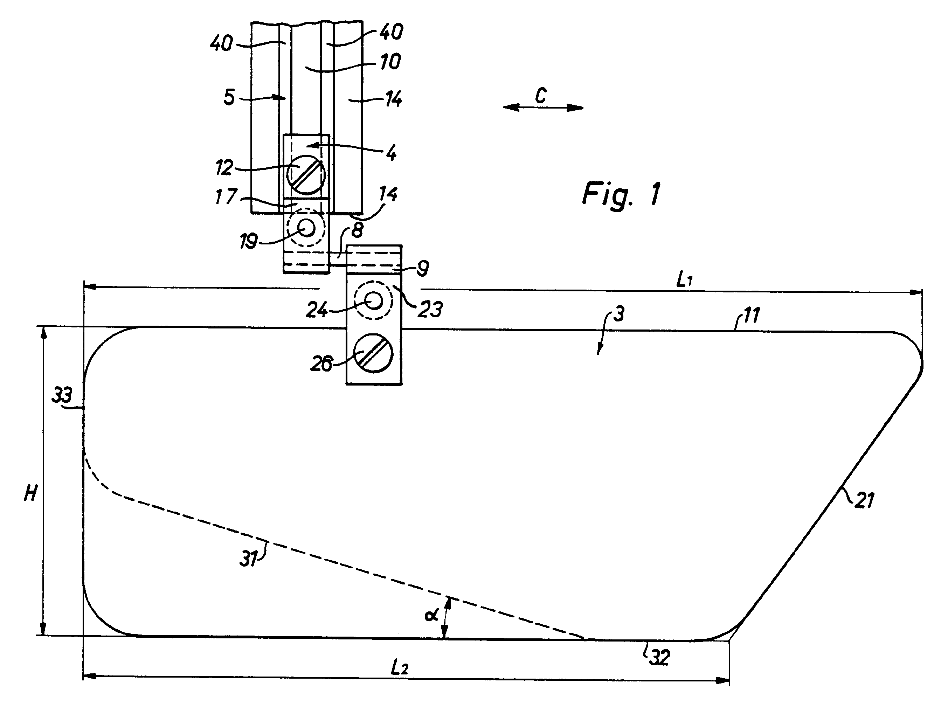

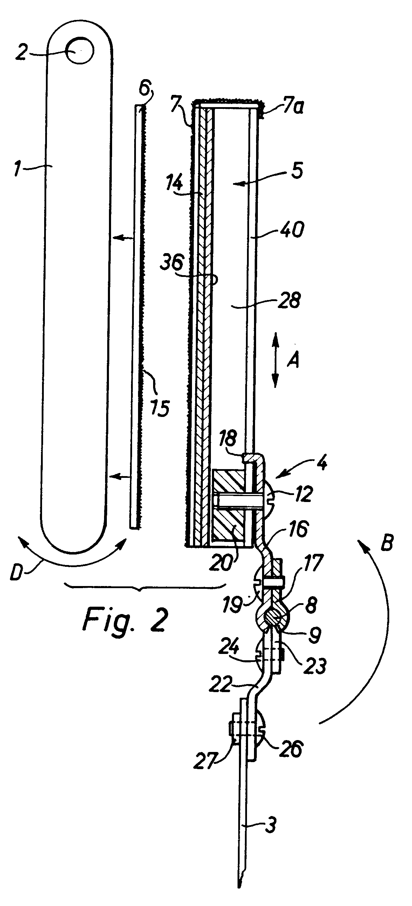

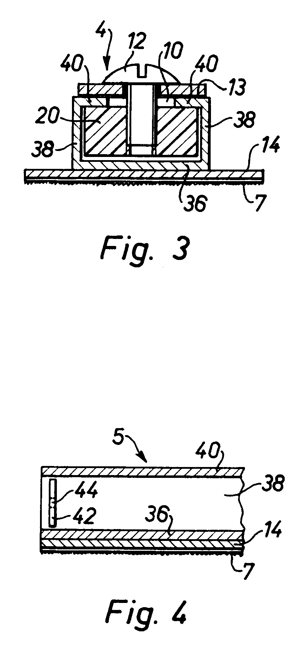

Die Blendschutzeinrichtung gemäss den Figuren 1 und 2 enthält eine dunkel getönte, aber durchscheinende, aus einem Kunststoff bestehende Blendschutzscheibe 3, die entlang einer Schiene 5 in Richtung des Doppelpfeiles A linear verschiebbar und relativ zu dieser Schiene 5 gemäss dem Pfeil B um eine Achse 8 verschwenkbar ist. Die Schiene 5 ist gemäss Figur 3 kastenförmig profiliert ausgebildet und enthält eine Bodenfläche 36, zwei rechtwinklig von dieser abragende, zueinander parallele Seitenwände 38, von denen zwei längliche Flansche 40 parallel zur Bodenfläche 36 gegeneinander ragen und in der Mitte einen Schlitz 10 frei lassen. Mit dieser Schiene 5 ist ein gegenüber der Bodenfläche 36 breiteres Stützblech 14 starr befestigt. Schiene 5 und Stützblech 14 könnten auch aus einem einzigen Stück, vorzugsweise Aluminium bestehen. In dieser Schiene 5 ist ein Schieber 4 linear beweglich gehalten. Im Innenraum 28 der Schiene 5 befindet sich ein vorzugsweise aus Kunststoff bestehender, quaderförmiger Schiebekörper 20 an dem auf der Oberseite der Schiene 5 eine erste Lasche 16 mittels einer Kopfschraube 12 gehalten ist. Zwischen der ersten Lasche 16 und den beiden Flanschen 40 befindet sich ein Reibbelag 13, beispielsweise eine Filz- oder Gummischeibe 13. Mit der Kopfschraube 12 wird der Schiebekörper 20 gegen die Innenfläche der beiden Flansche 40 gezogen, wobei er im Innern der Schiene 5 seitlich geführt ist. Durch mehr oder weniger starkes Festziehen der Kopfschraube 12 lässt sich die Reibwirkung zwischen dem an der ersten Lasche 16 anliegenden Reibbelag 13 und der Schiene 5 verändern. Die Reibwirkung wird so eingestellt, dass sich der Schieber 4 zwar von Hand leicht in Richtung des Doppelpfeiles A verschieben lässt, dass er sich aber auch durch Erschütterungen nicht von selbst verstellt.
Die erste Lasche 16 umschliesst zusammen mit einem ersten Klemmschuh 17 eine Achse 8. Lasche 16 und Klemmschuh 17 werden durch eine erste Befestigungsschraube 19 verbunden. Mit der Achse 8 ist seitlich eine zweite Lasche 22 und ein zweiter Klemmschuh 23 verbunden, die mit einer zweiten Befestigungsschraube 24 zusammengehalten werden. Die Klemmwirkung einer der beiden Befestigungsschrauben 19 oder 24 ist so gewählt, dass eine Drehbewegung um oder mit der Achse 8 unter Ueberwindung eines Reibungswiderstandes möglich ist, derart dass sich die Blendschutzscheibe 3 um die zylindrische Achse 8 gemäss Pfeil B verschwenken lässt. Die erste und zweite Lasche 16,22 sind untereinander gleich ausgebildet und auch der erste und zweite Klemmschuh 17 und 23 haben untereinander die gleiche Form. Die Befestigung der Blendschutzscheibe 3 an der zweiten Lasche 22 erfolgt durch eine Schraube 26 mit Mutter 27.
Der Schieber 4 ist derart ausgebildet, dass die Achse 8 in der untersten Endlage des Schiebers 4 - wie dies aus Figur 1 hervorgeht - vom Schienenende 14 distanziert ist, sodass sich die Blendschutzscheibe 3 - von der in Fig. 2 dargestellten Lage aus - auch entgegen der Pfeilrichtung B, also beidseitig der Verschiebungsebene verschwenken lässt.
Zur Sicherung gegen ein unerwünschtes seitliches Verschwenken ist die erste Lasche 16 an ihrem obern Ende mit einer in den Längs-Schlitz 10 eingreifenden Nase 18 versehen.

Die Oberkante 11 der Blendschutzscheibe 3 verläuft parallel zur Achse 8. Die Länge L₁ beträgt höchstens 20 cm, vorzugsweise etwa 16-18 cm. Die Blendschutzscheibe 3 hat die Form eines rechtwinkligen Trapezes. Die Schrägkante 21 verläuft im Winkel von etwa 45° zur Oberkante 11. Die untere Kante 32 L₂hat eine Länge von höchstens 16 cm, vorzugsweise etwa 12-14 cm. Die Höhe H soll 10 cm nicht überschreiten und vorzugsweise etwa 7-8 cm betragen. Als Ausführungsvariante könnte die untere Kante 31 auch in einem Winkel α von etwa 16-22° verlaufen. Eine weitere Variante besteht darin, dass die Blendschutzscheibe 3 mit Stufen versehen ist. Zur Begrenzung der Schieberbewegung sind an beiden Enden der Schiene 5 Anschläge 42 vorhanden. Gemäss Fig. 4 haben diese Anschläge 42 die Form einer dünnen federnden Scheibe welche zwei mit seitlichen Nocken in Schlitze 44 der Seitenwände 38 eingreifen. Infolge ihrer Federwirkung lassen sich diese Scheiben nach dem Einsetzen des Schiebers 4 in die Schiene 5 montieren.

Die von der Schiene 5 abgewandte Seite des Stützbleches 14 ist mit einem Haftbelag versehen. Unter Haftbelag soll entweder eine Klebschicht oder ein Klettenverschlussteil verstanden werden, mit dem das Stützblech 14 und die mit diesem starr verbundene Schiene 5 an einer fahrzeugeigenen Sonnenschutzklappe 1 befestigt werden kann. Bevorzugt wird die Verwendung eines an sich bekannten textilen Klettenverschlusses, bei dem der eine Teil mit kleinen Häckchen oder pilzförmigen Köpfchen versehen ist, die lösbar in vliesartige Schlingen eines Gegenstückes eingreifen. Der eine Klettenverschlussteil 7 wird auf das Stützblech 14 aufgeklebt und oben um das Schienenende herumgeführt, sodass sich ein Auflagestreifen 7a für die hochgeklappte Blendschutzscheibe 3 ergibt.

Ein mit Klebstoff versehener Streifen 6 welcher das Gegenstück 15 des Klettenverschlussteiles trägt wird an der Sonnenschutzklappe 1 festgeklebt. Vorzugsweise wird dieser Streifen 6 wesentlich breiter als die Breite des Stützbleches 14 gewählt - mindestens doppelt so breit - sodass zum Aufsetzen der Schienen-Klettenverschlusssteiles 7 auf die Sonnenschutzklappe 1 eine grosse Variationsmöglichkeit in Richtung des Doppelpfeiles C (Fig.1) besteht. Die Befestigung der Blendschutzeinrichtung an der Sonnenschutzklappe 1 erfolgt durch leichtes Andrücken des ersten Klettenverschlussteiles 7 auf den Gegen-Klettenverschlussteil 15. Sollte die gewählte Befestigungsstelle dem jeweiligen Autoinsassen nicht befriedigen, lassen sich die beiden Teile des Klettenverschlusses leicht lösen und in einer andern Position neu verbinden.

Die Sonnenschutzklappe 1 lässt sich um den Bolzen 2 samt Blendschutzeinrichtung in Richtung des Doppelpfeiles D verschwenken. Somit kann ein Autoinsasse einerseits die Sonnenschutzklappe 1 um den Bolzen 2 und anderseits die Blendschutzeinrichtung um die parallele Achse 8 in die ihm zusagende Lage verschwenken und die Höhenlage der Blendschutzscheibe 3 durch den Schieber 4 einstellen. Bei Nichtgebrauch lässt sich die Blendschutzscheibe 3 um die Achse 8 herum hochschwenken. Die flache Bauart der Blendschutzeinrichtung erlaubt ein Hochklappen der Sonnenschutzklappe 1 auch im eingeschwenkten Nichtbetriebszustand der Blendschutzscheibe.

Ausser an der Sonnenschutzklappe 1 kann die Blendschutzeinrichtung auch an andern Fahrzeugteilen befestigt werden und auch gegen Blendung durch Sonnenstrahlen verwendet werden. Die lösbare Befestigung kann somit auch an Front- und Seitenstreben der Karosserie über den Front- oder Seitenfenstern erfolgen.

Eine Ausführungsvariante des Schiebers besteht darin, dass er verschiebbar rittlings auf die Schiene aufgesetzt wird. Ferner soll unter dem Ausdruck "Schiene" auch ein rohrförmiges Gebilde verstanden werden.
Bei der Wahl einer breitern Schiene 5 kann allenfalls auf das Stützblech 14 verzichtet werden und der Haftbelag 7 direkt auf dem Boden der Schiene 5 aufgebracht werden. Eine weitere Ausführungsform besteht darin, dass die Blendschutzeinrichtung in die Sonnenschutzklappe 1 integriert ist.

## Patentansprüche

1. Blendschutzeinrichtung für Autoinsassen, gegen Blendgefahr entgegenkommender Fahrzeuge, mit einer plattenförmigen, getönten Blendschutzscheibe (3) und mit Befestigungsmitteln (7) zur Befestigung an der fahrzeugeigenen Sonnenschutzklappe (1) oder an einem Fahrzeugteil, wobei die Blendschutzscheibe (3) in einer länglichen Schiene (5) linear verschiebbar gehalten und eine quer zur Verschieberichtung angeordnete Achse (8) schwenkbar ist, mit der Schiene (5) ein in deren Längsrichtung verstellbarer Schieber (4) zusammenwirkt, der eine Schwenkachse (8) trägt, die ihrerseits mit der Blendschutzscheibe (3) verbunden ist, dadurch gekennzeichnet, dass sich die Schwenkachse (8) in der untersten Schieberstellung unterhalb der Schienenunterkante (14) befindet.

2. Blendschutzeinrichtung nach Anspruch 1, dadurch gekennzeichnet, dass die Schiene (5) auf ihrer Rückseite mit einem Haftverschluss-Streifen, insbesondere einem Klettenverschlussteil (7) versehen ist, der zum lösbaren Zusammenwirken mit einem Gegen-Haftverschluss-Streifen (6), insbesondere einem Gegen-Klettenverschlussteil (15) bestimmt ist.

3. Blendschutzeinrichtung nach Anspruch 2, dadurch gekennzeichnet, dass die Schiene (5) ein Kastenprofil hat mit einem Längsschlitz (10) und der Schieber (4) den Längsschlitz (10) untergreift und Mittel (13) zur Reibungserhöhung für den Schieber (4) vorhanden sind.

4. Blendschutzeinrichtung nach einem der Ansprüche 2-3, dadurch gekennzeichnet, dass die Schiene (5) an beiden Enden mit Anschlägen (42) für den Schieber (4) versehen ist und zwischen der Achse (8) und der Blendschutzscheibe (3) Klemmorgane (9,16;22,23) vorhanden sind, welche bezüglich der Achse (8) eine Reibungserhöhung bewirken.

5. Blendschutzeinrichtung nach einem der Ansprüche 1-3, dadurch gekennzeichnet, dass die Blendschutzscheibe (3) eine grösste Länge (L₁) von höchstens 20 cm, vorzugsweise von 16-18 cm und eine Höhe (H) von höchstens 10 cm, vorzugsweise 7-8 cm hat und eine Schmalseite (21) als Schrägfläche (21) ausgebildet oder mit Stufen versehen ist.

6. Blendschutzeinrichtung nach einem der Ansrüche 2-5 mit einer fahrzeugeigenen, schwenkbar befestigten Sonnenschutzklappe (1), dadurch gekennzeichnet, dass mit der Sonnenschutzklappe (1) ein Haftverschluss-Streifen (6) verbunden ist, der mindestens die doppelte Breite des mit diesem lösbar zusammenwirkenden Haftverschluss-Streifen (7) der Schiene (5) hat und die Schiene (5) samt Blendschutzscheibe (3) mit der Sonnenschutzklappe (1) seitlich und in der Höhe in unterschiedlichen Positionen lösbar verbindbar ist.

7. Verwendung einer Blendschutzeinrichtung, insbesondere nach einem der Ansprüche 1-6, dadurch gekennzeichnet, dass eine getönte Blendschutzscheibe (3) derart dimensioniert und an einer fahrzeugeigenen Sonnenschutzklappe (i) höhenverstellbar und verschwenkbar angeordnet wird, dass ein Fahrzeuginsasse zur Vermeidung der Blendwirkung entgegenkommender Fahrzeuge durch leichte Bewegung des Kopfes oder der Augen wahlweise durch die Blendschutzscheibe (3) hindurch oder unter oder neben dieser durchblicken kann.

## Claims

1. Glare-protection device for the passengers of motor vehicles, against the risk of glare from oncoming vehicles, with a plate-shaped, tinted glare-protection screen (3) and with attachment means (7) for attachment to the vehicle's own sun visor (1) or to a part of the vehicle, the glare-protection screen (3) being held so that it is able to slide in a linear manner in an elongated guide rail (5) and is able to tilt about a pin (8) arranged transversely with respect to the displacement direction, cooperating with the guide rail (5) is a slide (4) able to move in its longitudinal direction, which supports a pivot pin (8), which is in turn connected to the glare-protection screen (3), characterised in that in the lowermost position of the slide, the pivot pin (8) is located below the lower edge (14) of the guide rail.

2. Glare-protection device according to Claim 1, characterised in that on its rear side the guide rail (5) is provided with an adhesive fastener strip, in particular a hook and loop fastener part (7), which is intended for detachable cooperation with a counter adhesive fastener strip (6), in particular a counter hook and loop fastener part (15).

3. Glare-protection device according to Claim 2, characterised in that the guide rail (5) has a box profile with a longitudinal slot (10) and the slide (4) engages below the longitudinal slot (10) and means (13) are provided for increasing the friction for the slide (4).

4. Glare-protection device according to one of Claims 2 to 3, characterised in that the guide rail (5) is provided at both ends with stops (42) for the slide (4), clamping members (9, 16; 22, 23) being provided between the pin (8) and the glare-protection screen (3), which members bring about an increase of friction with regard to the pin (8).

5. Glare-protection device according to one of Claims 1 to 3, characterised in that the glare-protection screen (3) has a greatest length (L₁) of 20 cm maximum, preferably of 16-18cm and a height (H) of 10cm maximum, preferably 7-8cm and one narrow side (21) is constructed as an inclined surface (21) or provided with steps.

6. Glare-protection device according to one of Claims 2 to 5 with a sun visor (1) attached so that it is able to tilt and belonging to the vehicle, characterised in that connected to the sun visor (1) is an adhesive fastener strip (6), which is at least twice as wide as the adhesive fastener strip (7) of the guide rail (5) cooperating detachably therewith and the guide rail (5) together with the glare-protection screen (3) can be detachably connected to the sun visor (1) laterally and vertically in different positions.

7. Use of a glare-protection device, in particular according to one of Claims 1 to 6, characterised in that a tinted glare-protection screen (3) is dimensioned and arranged so that it is vertically adjustable and tiltable on the vehicle's own sun visor so that in order to avoid the glare of oncoming vehicles, a passenger seated in the vehicle is able to look through the glare-protection screen (3) or below or beside the latter optionally by a simple movement of the head or eyes.

## Revendications

1. Dispositif de protection de passagers de véhicules automobiles contre le danger d'éblouissement provoqué par les véhicules venant en sens inverse, comportant une vitre anti-éblouissement teintée en forme de plaque (3) et des moyens de fixation (7) pour sa fixation sur le clapet pare-soleil (1) propre au véhicule ou sur une partie dudit véhicule, ladite vitre anti-éblouissement (3) étant maintenue de manière à pouvoir coulisser linéairement dans un rail longitudinal (5) et à pouvoir basculer autour d'un axe (8) disposé transversalement par rapport à la direction de coulissement, un poussoir (4) mobile en direction longitudinale coopérant avec le rail (5) et supportant un axe de pivotement (8) qui, en ce qui le concerne, est relié à la vitre de protection anti-éblouissement (3), caractérisé en ce que, dans la position inférieure du poussoir, l'axe de pivotement (8) se trouve en-dessous de l'arête inférieure (14) du rail.

2. Dispositif de protection anti-éblouissement selon la revendication 1, caractérisé en ce que le rail (5) est muni sur son côté arrière d'une bande de fermeture adhésive, en particulier une bande à crampons (7), qui est destinée à coopérer de manière amovible avec une bande à fermeture adhésive antagoniste (6), en particulier avec une bande à crampons antagoniste (15).

3. Dispositif de protection anti-éblouissement selon la revendication 2, caractérisé en ce que le rail (5) présente un profil en caisson muni d'une fente longitudinale (10) et en ce que le poussoir (4) passe en-dessous de la fente longitudinale (10) et que des moyens (13) pour augmenter le frottement du poussoir (4) sont prévus.

4. Dispositif de protection anti-éblouissement selon l'une des revendications 2 à 3, caractérisé en ce que le rail (5) est muni, sur ses deux extrémités, de butées (42) pour le poussoir (4) et en ce que, entre l'axe (8) et la vitre de protection anti-éblouissement (3), se trouvent des organes de serrage (9,16,22,23) qui provoquent une augmentation du frottement par rapport à l'axe (8).

5. Dispositif de protection anti-éblouissement selon l'une des revendications 1 à 3, caractérisé en ce que la plus grande longueur (L₁) de la vitre anti-éblouissement (3) est égale à 20 cm au maximum, de préférence 16 à 18 cm, et sa hauteur (H) égale à 10 cm au maximum, de préférence 7 à 8 cm, et que sa largeur (21) est configuré en face inclinée (21) ou muni de gradins.

6. Dispositif de protection anti-éblouissement selon l'une des revendications 2 à 5, comportant un clapet pare-soleil (1) propre au véhicule, fixé de manière à pouvoir pivoter, caractérisé en ce que, audit clapet pare-soleil (1) est reliée une bande (6) de fermeture adhésive dont la longueur est au moins égale au double de celle de la bande (7) de fermeture adhésive du rail (5) et qui coopère de manière amovible avec la bande (6), et en ce que le rail (5), avec la vitre anti-éblouissement (3) et le clapet pare-soleil (1), peut être assemblé de manière amovible dans différentes positions latérales et en hauteur.

7. Utilisation d'un dispositif de protection anti-éblouissement, en particulier selon l'une des revendications 1 à 6, caractérisée en ce qu'une vitre anti-éblouissement teintée (3) est dimensionnée et disposée de manière réglable en hauteur et pivotable sur un clapet pare-soleil (1) propre au véhicule, de telle sorte qu'un passager de ce véhicule puisse, pour éviter l'effet éblouissant des véhicules arrivant en sens inverse, par un léger mouvement de la tête ou des yeux, soit traverser du regard la vitre anti-éblouissement (3) soit porter son regard sous ou à côté de cette vitre.
